# DEMANDE DE BREVET EUROPEEN

(11) **EP 0 597 761 A1**
(43) Date de publication de la demande: **18.05.1994**
(21) Numéro de dépôt: 93402727.7
(22) Date de dépôt: 05.11.1993
(51) Int. Cl.: F23G 7/06, F23G 5/08, B09B 1/00

(54) **Décharge et procédé de vitrification de déchets**

(30) Priorité: 12.11.1992 FR 9213594
(71) Demandeur: G.T.I. ENVIRONNEMENT SA, F-75008 Paris (FR)
(72) Inventeur: Trepaud, Pierre, F-75017 Paris (FR)
(74) Mandataire: Eidelsberg, Victor Albert

(57) **Abrégé**

Elle comprend une aire de décharge (1) munie d'un collecteur (2) de biogaz, qui communique avec un électrobrûleur. (9) Application notamment au traitement des déchets.

## Description

La présente invention est relative aux décharges de déchets, notamment de déchets urbains et de déchets industriels, ainsi qu'aux procédés de vitrification de déchets.

Une décharge produit du biogaz pendant au moins une trentaine d'années, cette production évoluant dans le temps en croissant dans les premières années et en décroissant dans les dernières années. Le biogaz provenant de la décomposition des déchets stockés dans une décharge est un gaz pauvre, dont la composition type en volume est la suivante :
- méthane 40 à 50 %
- CO² 25 à 35 %
- azote 25 à 50 %
- faible quantité d'oxygène, d'hydrogène, de CO.

Un tel gaz donne une température pratique de flamme de l'ordre de 1100 à 1200°C, insuffisante pour obtenir une fusion des déchets.

L'invention vise une décharge qui permet de tirer profit du biogaz émis par la décharge elle-même pour faire fondre des déchets et diminuer ainsi leur volume.

La décharge comporte une aire de décharge munie d'un collecteur de biogaz. Suivant l'invention, le collecteur communique avec un électrobrûleur.

Un électrobrûleur est un brûleur à gaz à apport d'énergie électrique, comme décrit par exemple au brevet des Etats-Unis d'Amérique N°5 088 917. Il permet d'atteindre une température suffisante pour obtenir une fusion des déchets dans de bonnes conditions, alors que, jusqu'ici, la mise à profit de l'énergie calorifique du biogaz issu d'une décharge généralement éloignée des zones d'habitation n'était pas rentable, même pour alimenter de simples installations de chauffage.

Si l'électrobrûleur est disposé de manière à fournir de la chaleur à un four de fusion des déchets dont il fait partie, on peut faire fondre les déchets dans un four de fusion en utilisant du biogaz issu des déchets eux-mêmes comme combustible dans ce four de fusion. On peut transformer ainsi des déchets en produits vitrifiés occupant bien moins de place. De préférence, il est prévu un dispositif d'alimentation du four en déchets de l'aire de la décharge. On élimine ainsi simultanément de la décharge le biogaz et les déchets.

Pour rendre également la décharge aussi autonome que possible, le collecteur peut communiquer avec un moteur thermique entraînant un alternateur alimentant électriquement l'électrobrûleur. On utilise ainsi du biogaz issu des déchets pour produire de l'électricité destinée à être fournie à l'électrobrûleur.

L'électrobrûleur peut être alimenté en air et on peut prévoir un dispositif de chauffage de l'air d'alimentation de l'électrobrûleur. De préférence, ce dispositif de chauffage de l'air d'alimentation de l'électrobrûleur communique avec le collecteur de biogaz. On utilise ainsi du biogaz issu de déchets pour chauffer de l'air servant de comburant dans l'électrobrûleur, ce qui permet d'élever la température que l'électrobrûleur permet d'atteindre. Un système de régulation permet de maintenir cette température de réchauffage à des valeurs comprises entre 400 et 600°C. L'électrobrûleur ainsi alimenté donne une flamme dont la température moyenne est de l'ordre de 1400 à 1500°C sans apport d'électricité. Cette flamme permet de maintenir en température un four à une température convenable pour maintenir un magma en fusion entre 1400 et 1500°C.

Le four de fusion des déchets peut faire partie d'une installation de vitrification qui comprend un four de fusion des déchets, le bain de déchets débordant par un trop-plein dans un bassin empli d'eau où il se fractionne en petits morceaux vitrifiés sous l'effet du choc thermique brutal. Un extracteur retire en permanence ces éléments vitrifiés.

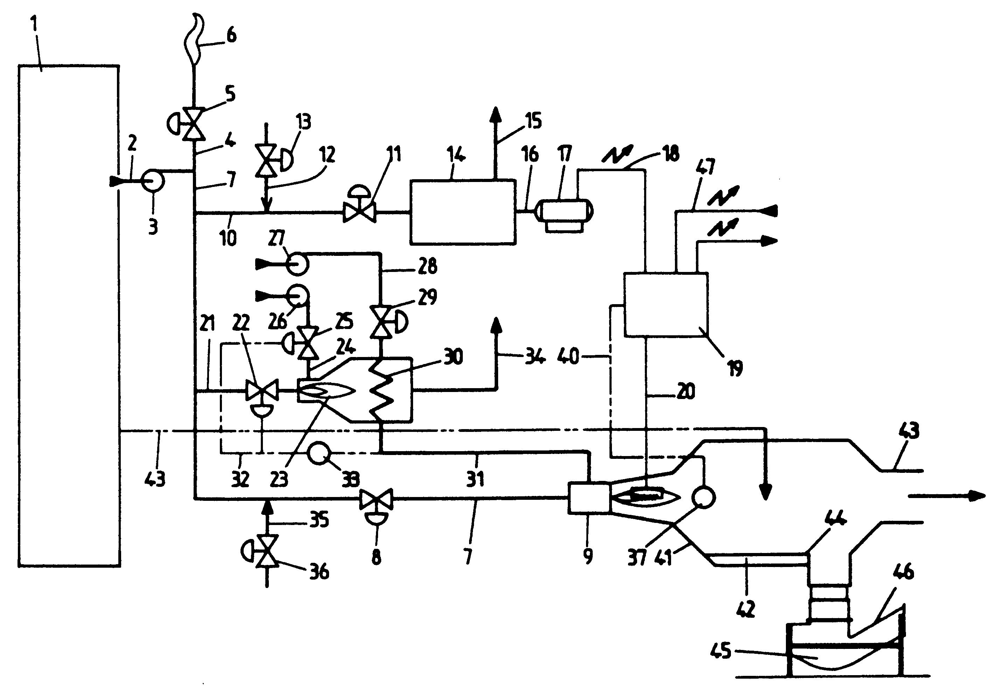

La figure unique du dessin annexé est un schéma d'une décharge suivant l'invention.

La décharge suivant l'invention comprend une aire de décharge 1, munie d'un collecteur de biogaz 2. Le collecteur de biogaz 2 communique, par l'intermédiaire d'une pompe 3, avec un conduit 4 muni d'une vanne 5 et menant à une torchère 6, et avec un conduit 7 à vanne 8 menant à un électrobrûleur 9.

Du conduit 7 part en dérivation un conduit 10 muni d'une vanne 11 en amont de laquelle débouche un conduit 12 à vanne 13 d'apport de gaz naturel. Le conduit 10 alimente un moteur thermique 14 muni d'un conduit 15 de sortie des gaz en direction d'une cheminée et d'un conduit 16 menant à un alternateur 17. Un conducteur électrique 18 fournit, par l'intermédiaire d'un redresseur 19 et d'un conducteur 20, du courant électrique à l'électrobrûleur 9.

Du conduit 7 part en dérivation un autre conduit 21 qui, par l'intermédiaire d'une vanne 22, alimente un brûleur 23. Ce brûleur 23 est également alimenté en air par un conduit 24 muni d'une vanne 25 à partir d'une source d'air 26. Une autre source d'air 27 alimente, par un conduit 28 et par une vanne 29, un faisceau de réchauffage 30 de l'air par la chaleur émise par le brûleur 23. L'air sort du faisceau de réchauffage 30 par un conduit 31 et débouche dans l'électrobrûleur 9. Un circuit de réglage 32 comporte une sonde de température 33 permettant d'ouvrir plus ou moins la vanne 25 en fonction de la température. Les gaz brûlés du brûleur 23 sortent vers la cheminée par un conduit 34. Le conduit 7 peut recevoir un apport de gaz naturel par un conduit 35 à vanne 36.

Une sonde de température 37 dans l'électrobrûleur 9 permet, par un circuit 40 de régulation menant au redresseur 19, de régler l'énergie électrique envoyée à l'électrobrûleur 9.

L'électrobrûleur chauffe par rayonnement un four de fusion 41 au fond duquel se trouve un bain 42 de déchets fondus. Le four de fusion des déchets 41 est alimenté en déchets issus de la décharge 1 par un dispositif 43 schématisé par une ligne en tirets à la figure. Les gaz issus du four 41 sortent par un conduit 43. Le bain 42 est maintenu à 1500°C environ par l'électrobrûleur 9 et déborde par un trop-plein 44 dans un bassin 45 empli d'eau où le bain fondu se fractionne en petits morceaux vitrifiés sous l'effet du choc thermique brutal. Un extracteur 46 retire en permanence les éléments vitrifiés.

Le redresseur 19 est relié au secteur par un conducteur 47 de manière à suppléer l'alternateur 17 dans le cas où l'énergie électrique que celui-ci fournit est insuffisante. Les conduits 12 et 35 de gaz naturel ont eux aussi pour rôle de suppléer à une insuffisance de la teneur calorifique du biogaz passant dans le conduit 7.

## Revendications

1. Décharge comportant une aire de décharge (1) munie d'un collecteur (2) de biogaz, caractérisée en ce que le collecteur (2) communique avec un électrobrûleur (9).

2. Décharge suivant la revendication 1, caractérisée en ce que l'électrobrûleur (9) est disposé de manière à fournir de la chaleur à un four (41) de fusion de déchets.

3. Décharge suivant la revendication 1 ou 2, caractérisée par un dispositif (43) d'alimentation du four (41) en déchets de l'aire de la décharge (1).

4. Décharge suivant l'une des revendications 1 à 3, caractérisé en ce que le collecteur (2) communique avec un moteur thermique (14) entraînant un alternateur (17) alimentant électriquement l'électrobrûleur (9).

5. Décharge suivant l'une des revendications 1 à 4, caractérisée en ce que l'électrobrûleur (9) est alimenté en air et il est prévu un dispositif de chauffage (30) de l'air d'alimentation de l'électrobrûleur (9).

6. Décharge suivant la revendication 5, caractérisée en ce que le dispositif de chauffage (30) de l'air d'alimentation de l'électrobrûleur (9) communique avec le collecteur (2) de biogaz.

7. Décharge suivant l'une des revendications précédentes, caractérisée en ce que le four de fusion (41) des déchets est suivi d'un bassin (45) de vitrification.

8. Procédé de vitrification de déchets qui consiste à les faire fondre dans un four, caractérisé en ce qu'il consiste à utiliser du biogaz issu des déchets comme combustible dans le four de fusion.

9. Procédé suivant la revendication 8, caractérisé en ce qu'il consiste à utiliser du biogaz issu de déchets pour chauffer de l'air servant de comburant dans le four de fusion.

10. Procédé suivant la revendication 8 ou 9, caractérisé en ce qu'il consiste à utiliser du biogaz issu de déchets pour produire de l'électricité destinée à être fournie au four de fusion.
